(19) Europäisches Patentamt
European Patent Office
Office européen des brevets

(11) **EP 4 407 490 A1**

(12) **EUROPEAN PATENT APPLICATION**

(43) Date of publication:
**31.07.2024 Bulletin 2024/31**

(21) Application number: **23305115.0**

(22) Date of filing: **30.01.2023**

(51) International Patent Classification (IPC):
**G06F 21/34** $^{(2013.01)}$    **G06F 21/43** $^{(2013.01)}$

(52) Cooperative Patent Classification (CPC):
**G06F 21/34; G06F 21/43**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **THALES DIS FRANCE SAS**
**92190 Meudon (FR)**

(72) Inventors:
• **FAHER, Mourad**
  **78160 MARLY LE ROI (FR)**
• **DEBOIS, Georges**
  **75013 PARIS (FR)**

(74) Representative: **Quintero Romero, Manuel**
**Thales Dis France SAS**
**Intellectual Property Department**
**6, rue de la Verrerie**
**92190 Meudon (FR)**

(54) **SECURE ON-BOARDING OF PERSONAL ATTRIBUTES ON AN EXTERNAL ENTITY**

(57)    The invention provides a method for on-boarding at least one personal attribute of a user to an external entity, the method comprising:
- authenticating, by a token of the user, to an issuing system;
- if the token is authenticated, computing by the issuing system the following steps:
o retrieving the at least one personal attribute of the user;
o generating a master key, and deriving out as many derived keys as personal attributes are retrieved;

o encrypting each personal attribute with a respective derived key;

- sending, by the issuing system, the master key to the token, the token storing the master key; and
- sending, by the issuing system, the at least one encrypted personal attribute to the external entity, the external entity storing the set of at least one encrypted personal attribute of said user.

**FIG. 1**

**Description**

<u>**TECHNICAL FIELD**</u>

This invention relates to the field of on-boarding of personal attributes on an external entity, such as on a mobile wallet of a user device. Particularly, the invention proposes the on-boarding of personal attributes to an external entity, for their storage, and further access to a service or resource, authentication or other purposes.

In advantageous embodiments, the invention proposes a simple, but secure, method for on-boarding personal attributes from different users into the same external entity and their usage. This allows a multi-user digital wallet on a mobile device that can be applicable to any mobile Operating System, OS.

<u>**BACKGROUND OF THE INVENTION**</u>

A natural or legal person is generally associated to several personal attributes, that enable its identification or authentication to third parties. A subset of these personal attributes, which is the minimum set of data that can be used to authenticate a person, may be called Personal Identification Data, PID. Such personal attributes are usually written on hardware objects, such as an ID card for example.

Nowadays, personal hardware tokens such as electronic identity card, i.e., eID card, may also store in an electronic way, personal attributes of a person, such as PID, for example.

However, with the emergence of digital or on-line networks and services, personal attributes tend to be further represented in a digital form. Digital personal attributes can be used, for instance, to access an online service, to authenticate a person for security purposes or to access to some digital or physical environments or resources.

As these digital personal attributes enable a person to be identified and authenticated to access to many resources or services, including governmental services, the security associated with the storage and communication of personal attributes is critical. In some countries, regulations aim at defining secure protocols and processes to regulate the storage of personal attributes such as PIDs in digital wallets. This is for example the case in Europe, where eIDAS2 Regulation is currently developed.

Despite the upcoming regulations, there are still latent threats that may pose at risks the unauthorized access and misuse of the user's personal attributes.

Therefore, there is a need in the industry for a complete solution that ensures altogether: user privacy, transaction security, data minimization, and selective disclosure of personal attributes. Namely, this need should be compatible with today's implementation(s) and future roadmaps.

Among possible upcoming features of digital wallets, inventors have found the underlying requisite of multi-user wallets, that is, digital wallets with on-boarded personal data from different users. This could be the situation of parents with children who do not possess their own personal devices or do not have the legal age to perform "legally binding" transactions. The same may apply to guardianships, curatorship or tutorships that may require to perform legally binding operations on behalf of other people. As a further example, different individuals or members (i.e., natural persons) representing a corporate or association may be required to perform legally binding operations on behalf of this "legal person" through their personal devices. Alike these individuals (e.g., members, employees, civil servants) may also share a mobile device for different administrative purposes.

Even if this multi-user mode is today supported by a very limited number of OS (e.g. Android), the functionality itself is not available by all OEMs (e.g. not enabled by Samsung's devices). Thus, there is the further need in the industry to provide a multi-user wallet ensuring sensitive data segregation per user account that prevents cross accessing to other's users data on-boarded into the same digital wallet.

<u>**SUMMARY OF THE INVENTION**</u>

The present invention provides a solution for all the aforementioned problems by a method for on-boarding at least one personal attribute of a user to an external entity according to claim 1, a method for on-boarding personal attributes of a second user to the same external entity according to claim 4, a method for performing a transaction with a service provider according to claim 5, a method for renewing the master key stored in the token of the user according to claim 9, a system according to claim 13, an external entity according to claim 14, a token according to claim 15, an issuing system according to claim 16, and a trusted server according to claim 17. In dependent claims, preferred embodiments of the invention are defined.

In a first inventive aspect, the invention provides a method for on-boarding at least one personal attribute of a user to an external entity. The method comprises the following steps:

- authenticating, by a token of the user, to an issuing system;

- if the token is authenticated, computing by the issuing system the following steps:

  ◦ retrieving the at least one personal attribute of the user;
  ◦ generating a master key, and deriving out as many derived keys as personal attributes are retrieved;
  ◦ encrypting each personal attribute with a respective derived key;

- sending, by the issuing system, the master key to the token, the token storing the master key; and
- sending, by the issuing system, the at least one encrypted personal attribute to the external entity, the external entity storing the set of at least one encrypted personal attribute of said user.

Throughout this document, a "personal attribute" refers to any attribute that is proper to a given person (either natural or legal). The personal attributes may comprise the name of a person, surname, birthdate, etc. or even physical attributes such as eye color, skin color or height. The personal attributes may also comprise a driver license identification, a driver license status, a driver license type, a diploma, a real estate deed or a health insurance identification.

Personal attributes may advantageously encompass Personal Identification Data, which are attributes that are commonly defined as necessary to uniquely identifying a person. The PID can be defined by some authority, such as a governmental identity, so that the PID required to identify persons on a given territory is identical. The PID may comprise several personal attributes, such as between 6 and 12 personal attributes for example. In a preferred embodiment, the personal attribute(s) is PID.

In turn, "on-boarding" refers to the transfer, extraction or derivation of the user's personal attributes from their officially accepted location to a separate entity, for their storage and equally acceptable usage, such as for e.g., user identification and/or authentication, for attribute verification or for any other purpose.

This external entity may be, preferably, a user device such as a smartphone, a desk computer, a laptop, a touchpad, a personal digital assistant, or any other device having adequate processing capabilities and communication interfaces, such as described hereafter. This external entity is preferably storing or including a digital wallet (either software or hardware). The digital wallet may be an application locally stored on the user device or remotely accessed (e.g., web-browser based application) by the user device.

In an embodiment, the digital wallet is associated with, or include in, a digital safe, a secure enclave or a secure element, SE. The data stored in the e.g., digital safe can only be accessed, read and write, by the digital wallet, so that other applications of the external entity cannot access this data without requesting access to the digital wallet. Throughout this entire description, the digital wallet can carry out the actions described hereinafter in relation with the external entity.

Finally, the token may be either a physical hardware token or a software-like token. The hardware token is preferably separated from the external entity, such as an eID card or passport (issued by a government), a FIDO token (issued by the "fast identity online" alliance) or a chip card (issued by any kind of organization e.g., bank institution or company). Such an external physical token may comprise some information written on it but may also store digital information including (or not) the personal attributes, such as PID for example, in an internal memory. Otherwise, the token may simply store an identifier allowing accessing to the personal attributes stored on cloud.

In general, the external entity, e.g., digital wallet of the mobile phone, may use any wired or wireless interface to read the hardware token.

To this end, the external entity can establish a wired or wireless secure channel with the token. Preferably, the secure channel can be based on a short-range communication protocol, such as Bluetooth, Bluetooth Low Energy, WiFi direct or, more preferably, NFC. Accordingly, the physical token may be enabled for establishing this communication channel. In particular, the token can be e.g., tapped, onto the external entity thus triggering a PACE and/or PIN protocol for successfully establishing the short-range secure channel. Alternatively, the secure channel may be a wired link, such as a card reader able to receive the token on one side, and to be connected to the external entity using e.g., a USB male interface, or any other interface that is compatible with a port of the external entity. The may also comprise a physical port e.g., slot, that is able to receive the token, such as an SD reader.

Alternatively, the token may be a software hosted on the external entity, such as an application stored and executed by the user device, that is different from the digital wallet. The software token may also be stored in a Secure Element embedded, eSE, or integrated, iSE, on the external entity.

In another alternative embodiment, the physical token may act in correlation with a remote server hosted on cloud (hereinafter referred to as "trusted server" application for master key renewal) under user control, serving to alleviate card burden. Alternatively, the physical token may be completely replaced with this "trusted server" application under user control, which is convenient for solution deployment in Member States not having e.g., their own eID card.

In a preferred embodiment, the external entity is a notified device with a Level of Assurance, LoA, "high", which means that is it associated with a certificate attributing a LoA "High" to the device (as per COMMISSION IMPLEM. ACTS (EU) 2015/1502). Attention is drawn to the fact that, in eIDAS2 context, the supported wallet can only perform transactions with legal effect if holder's PID are on-boarded onto this wallet.

In other embodiments, the external entity is not associated with a LoA "high" but it can still be used as a proxy for enabling a communication between the token and distant server(s).

A LoA is defined as the certainty with which an entity (a claimant e.g., the token and/or the external entity) claiming to a particular identity during authentication can be trusted to actually be the claimant's true identity. Higher LoAs reduce the risk of a fraudulent identity and increase the security of transactions. For identity proofing, the LoA may depend on the method of identification (in person or remote for example), the concerned attributes, and the degree of certainty with which those attributes are verified. The LoA may comprise several levels, such as "low", "substantial" and "high". No restriction is however attached to the number of levels and to the way they are named. For example, the LoAs can be indexed by numbers comprised between 1 and N, N being the number of possible levels.

In turn, the external entity itself, or in combination with another element, is configured to send information over a secure communication network (e.g., Transport Layer Security, TLS) to the issuing system end. In particular, the external entity communicates with the issuing server via one or more Application Program Interfaces, APIs, using e.g., HTTP or QWAC (Qualified Website Authentication Certificate) over TLS. The QWAC certificate is preferred since it is a qualified digital certificate under the trust services defined in the European Union eIDAS Regulation.

Advantageously, it is the issuing system itself which (1) generates the master key, (2) retrieve the personal attributes known of that user, (3) derive out the corresponding derived keys (so-called "daughter" keys through a key derivation function) and (4) spread out these data separately between the token and the external entity. Thus, after on-boarding, the token stores the master key while the external entity stores the encrypted personal attribute. Accordingly, the future usage of this personal data will require the cooperation of both items.

Advantageously, the present invention achieves a high level of user privacy, data minimization, and selective disclosure of personal attributes in an easy way that does not hinder the token, e.g., eID card, resources. Once the data leaves the issuing system, the personal attributes are always handled encrypted and never in clear, neither by the token nor by the external entity, de-risking potential vulnerabilities on controller memory.

This invention is also independent from the external entity, e.g., user device, OS built-in functionality. For some advantageous embodiment, the only requisite is supporting NFC APIs, which is a highly extended functionality in today's industry.

Thankfully, the external entity, e.g., digital wallet of user device, never access the personal data, e.g., PID, in clear hence ensuring a privacy preserving method bypassing the inherent wallet's security. This collaterally allows deploying the invention even with "low cost mobiles" i.e. the personal attributes are always encrypted (with respective derives keys) and therefore do not require storage on secure enclaves. That is, the invention can be even used with external entities not equipped with tamper-resistant enclaves, such as eSE.

Moreover, if the external entity is lost (or stolen), the attacker or theft cannot access to or disclose the on-boarded personal attributes without the appropriate separate token. Even if an expert user tries to maliciously generate fake personal attributes and master key/daughter keys, only an authorized issuing system (e.g., by certificate role) can upload the master key onto the card.

In a particular embodiment, during authentication, the token sends to the issuing system a certified public key of the token. The issuing system is then able to encrypt the master key with the certified public key of said token and send back the encrypted master key to the token (through the external entity) for its storage.

That is, after personalization stage, the token stores its public and private keys alongside the certified public key. The certified public key was certified (or signed) by a certification authority (e.g., the issuing system itself or a trusted third party) so it can be verified by simply knowing a public certificate of this certification authority.

In a preferred example, the eID card, as the token, authenticates to the issuing system using the chip authentication protocol as per CNIeV1.

Since the external entity simply passes on the encrypted (or encapsulated) master key to the token in order to be stored therein, the security is highly increased.

In a preferred embodiment, the at least one personal attribute of the user is labelled, this at least one corresponding label is stored into the token in an associable manner with the corresponding derived key to be derived from the master key.

That is, each possible personal attribute to be on-boarded into the external entity has a predefined label such as "Family_name", "First_name", "Address", "Birthdate", etc. that may render them universally recognizable. These labels may be defined by the issuing system itself or by a technical specification.

As known, the Key Derivation Function (KDF) require a secret value, i.e., the master key, and an identifier, i.e., the personal attribute label. Then a derived key, $DK\#i$ is calculated as $DK\#i = KDF(master\ key\ ||\ label\#1)$, possibly including other information in this calculation such as salts, etc. In other words, in this invention, the derived keys associated with the respective personal attributes can be retrieved by simply providing the labels.

In a preferred embodiment, the token stores a table as shown below enumerating and indexing the derived keys ($DK\#i$) with their values ($\#DK\#i$ value) and associated personal attribute labels ($PID\#i$).

Table 1.- Principle of encryption of personal attributes, as PIDs, per user.

| DK#i | DK#i value | Attribute label (PID#i) |
|---|---|---|
| 0x01 | 0x014F3567C.... | Family_name |
| 0x02 | 0x014C73565D... | First_name |
| 0x03 | 0x0A0B1F34D67C... | Address |
| 0x04 | 0x0C23F38F368CE... | Birthdate |
| ... | ... | ... |

Again, the token is simply aware about the master key (or derived keys) used by the issuing system to originally encrypt the personal attributes but not about the actual values, i.e., "Smith", "John", "13/05/1968", etc.

Accordingly, to smoothen the communication between the external entity and the token, the external entity may store the encrypted personal attributes (each with their respective derived key) as received by the issuing system and, in addition, its metadata may bind the encrypted personal attributes with the corresponding user's token (identifiable through e.g., a token's ID). In a further embodiment, the external entity may also store a table mapping each personal attribute labels with its corresponding encrypted values. However, again, the external entity never accesses the personal attributes values in clear.

In a second inventive aspect, the invention provides a method for on-boarding at least one personal attribute of a second user to the external entity where at least one personal attribute of a first user has been already on-boarded according to any of the embodiments of the first inventive aspect. The method comprises the following steps:

- declaring, by the external entity, a multi-user configuration to the issuing system;
- authenticating, by a token of the second user, that is, a second token, to the issuing system;
- if the second token is authenticated, computing by the issuing system the following steps:

   ◦ retrieving the at least one personal attribute of the second user;
   ◦ generating a second master key, and deriving out as many derived keys as personal attributes are retrieved;
   ◦ encrypting each personal attribute of the second user with a respective derived key from the second master key;

- sending, by the issuing system, the second master key to the second token, the second token storing the second master key; and
- sending, by the issuing system, the at least one encrypted personal attribute of the second user to the external entity, the external entity storing the set of at least one encrypted personal attribute of said second user.

Advantageously, different users can in turn on-board their respective personal attributes and utilize the external entity without risk of cross accessing each other personal attributes in clear.

Furthermore, if a user tries to re-use another on-boarded user's personal attributes, it is only upon involvement of user's personal token (e.g., eID card, FIDO token, etc. plus further authentication mechanisms such as PIN input, etc.) that the presentation of personal attribute(s) can be performed. That is, only the rightful combination of user's token and external entity will amount to the correct association of encrypted personal attributes + corresponding decrypting derived keys.

The skilled person will understand that the second inventive aspect is not limited to only two users and as many users as resources-wisely feasible can be on-boarded into the same external entity.

In a third inventive aspect, the invention provides a method for performing a transaction with a service provider by using the external entity where at least one personal attribute of a user has been already on-boarded according to any of the embodiments of the first or second inventive aspect. The method comprises the following steps:

- requesting, by the external entity, to perform the transaction to the service provider;
- in response, the external entity receives a requested list of at least one personal attribute to be proven to the service provider before performing the requested transaction;
- forwarding, by the external entity, the requested list of at least one personal attribute to the token of the user;
- identifying and generating, by said token, the derived key associated with each of the requested personal attributes from the list;
- sending, by said token, to the external entity, the at least one derived key associated with the requested personal attributes from the list;
- appending, by the external entity, at least one encrypted personal attribute that was stored in the external entity to the at least one derived key received from the token; and sending, by the external entity, this resulting payload to the service provider;
- decrypting, by the service provider, the at least one personal attribute received with its associated derived key;
- verifying, by the service provider, if the received at least one personal attribute meets a pre-established condition to allow performing the requested transaction; and
- if affirmative, the service provider allows the external entity to perform the requested transaction.

The service provider can be a distant server operated by e.g., a Relying Party (RP) or a Trust Service Provider (TSP). An RP server is a server providing access to a service application or to a resource. The TSP is a service provider that is considered as reliable or trusted, by an authority, such as a governmental authority. The TSP may be allowed to provide and preserve digital certificate(s), and/or to create and validate electronic signatures. For example, in the context of eIDAS, a list of TSP is maintained, each TSP being associated some digital certificates. In an alternative embodiment, the service provider may be the issuing system itself.

As mentioned before, the external entity itself, or in combination with another element, is configured to send information over a secure communication network (e.g., Transport Layer Security, TLS) to the service provider end via APIs using e.g., HTTP or QWAC over TLS. In a particular embodiment, a session API can be encapsulated into the external entity response to the service provider.

Advantageously, data minimization requirement is always met since only personal attributes for which encryption key is divulgated to service provider can be extracted out of the enciphered personal attributes set.

In a particular embodiment, in response to the request to the service provider by the external entity to perform the transaction, the external entity further receives a certified public key of the service provider, which is in turn forwarded to the token. The token then encrypts the at least one derived key associated with the requested personal attributes from the list before being sent to the external entity.

Advantageously, only the service provider owning the private key associated to the valid certificate can decrypt the derived keys necessary for decrypting the personal attributes.

In a particular embodiment, upon receiving the service request from the external entity, the service provider generates e.g., on the fly, unique transaction data, such as a unique transaction identifier or a nonce, to prevent replay attacks. That is, the service provider appends this data to the response already containing the list of requested personal attribute(s) and, optionally, the certified public key of the service provider. In turn, this data is forwarded by the external entity to the token for its processing.

Then, this data is hereby included (e.g., appended to, concatenated with or mixed to) by the token in its response to the external entity with the derived key(s) associated with the personal attribute(s).

Since this response is eventually received by the service provider, it shall check the included data to prevent replay attacks and, if verified, will allow the external entity to perform the requested transaction.

This transaction identifier or nonce may be either a random or a pseudo-random number, or also contain blocks of different information such as a timestamp or identifiers (external entity ID, RP or TSP ID, etc.). Nevertheless, the skilled person shall recognize that the actual format, size and other informative data sent in the nonce is case specific or, in future implementations, may be defined by standards. For instance, it may be required that the original nonce be first hashed to maintain a length.

In a particular embodiment, the external entity forwards to the token the corresponding labels of the personal attributes requested by the service provider; so that said token identifies and generates the corresponding derived key associated with the requested labels. The token then indexes the generated derived keys with their respective labels in the response to the external entity.

The external entity may receive the list of requested personal attributes from the service provider already with a standardized querying language or, instead, need to translate the request into the labels handled by the token. In this way, the token is able to identify the label(s) requested, and search for the associated derived keys.

In a particular embodiment, the list of at least one personal attribute requested by the service provider is displayed on a graphical user interface of the external entity, wherein the method further comprises receiving, by the external entity, a validation input with at least one validated personal attribute from the requested list.

In further aspects of the invention, the encryption technics protecting the confidentiality of the personal attributes either can use pre-determined salts or, as explained below, can renew periodically the master key. This further prevents user traceability.

In a fourth inventive aspect, the invention provides a method for renewing the master key stored in the token of the user whose at least one personal attribute has been on-boarded into the external entity according to any of the embodiments of the first or second inventive aspect. The method comprises the following steps:

- triggering, by the external entity, a master key renewal in the token;
- generating, by the token, a new master key;
- sending, by the token, both the former and new master keys to the external entity;
- appending, by the external entity, the at least one encrypted personal attribute that was stored in the external entity to the master keys received from the token; and sending, by the external entity, this resulting payload to a trusted server;
- deriving out, by the trusted server, from the former master key the derived keys associated to the personal attributes; and decrypting them;
- deriving out, by the trusted server, from the new master key as many new derived keys as personal attributes are; and encrypting them;
- encrypting, by the trusted server, each personal attribute with its respective new derived key; and
- sending, by the trusted server, the at least one personal attribute encrypted with the new derived keys to the external entity, the external entity storing the set of at least one encrypted personal attribute of said user.

Again, in a particular embodiment, the trusted server can belong to a TSP or the issuing system itself. In embodiments, the master key renewal can be carried out on card or off card.

In a particular embodiment, the token already stores the public key of the trusted server, so that the former and new master keys are encrypted with this public key of the trusted server before being sent to the external entity.

In a particular embodiment, the master key renewal is triggered at least by one of the following situations:

- per use, such as during session logging-out during, or after, a satisfactory transaction with the service provider;
- periodically such as daily or weekly; and/or
- at the request of the user.

For instance, the external entity may prompt the user to proceed with a master key renewal procedure within a time window, otherwise, the personal attributes on-boarded will be lost.

In a particular embodiment, the external entity is a user device, the user device comprising a digital wallet, preferably a multi-user digital wallet.

In a fifth inventive aspect, the invention provides a system for on-boarding at least one personal attribute of a user to an external entity, the method comprising:

- the external entity being configured to establish a secure channel with a token, preferably a short-range communication channel; and to establish another secure channel with an issuing system, preferably over a Transport Layer Security protocol;
- the token being configured to:

  ○ establish a secure channel with the external entity, and
  ○ be authenticated to the issuing system;

- the issuing system configured to:

  ○ authenticate the token of the user,
  ○ retrieve the at least one personal attribute of said user;
  ○ generate a master key, and to derive out as many derived keys as personal attributes are retrieved;
  ○ encrypt each personal attribute with the respective derived key;
  ○ send the master key to the token through the external entity; and
  ○ send the at least one encrypted personal attribute to the external entity,

  wherein the token is further configured to store the master key; and the external entity is further configured to store the set of at least one encrypted personal attribute of said user.

In a sixth inventive aspect, the invention provides an external entity, such as a user device comprising a digital wallet, with on-boarded personal attributes of a user, wherein the external entity is configured to establish a secure channel with a token of said user, preferably a short-range communication channel; and to establish another secure channel with an issuing system, preferably over a Transport Layer Security protocol. The external entity is further configured to store the set of at least one encrypted personal attribute of said user.

In a seventh inventive aspect, the invention provides a token configured to:

- establish a secure channel with an external entity;
- be authenticated to an issuing system; and
- store a master key generated by the issuing system, and labels of at least one personal attribute of the user on-boarded into the external entity, these at least one corresponding label being stored into the token in an associable manner with the corresponding derived key to be derived from the master key.

In an eighth inventive aspect, the invention provides an issuing system for issuing at least one personal attribute of a user to be on-boarded to an external entity, the issuing system being configured to:

- establish a secure channel with the external entity;
- authenticate a token of the user,
- retrieve at least one personal attribute of said user;
- generate a master key, and to derive out as many derived keys as personal attributes are retrieved;
- encrypt each personal attribute with the respective derived key;
- send the master key to the token through the external entity; and
- send the at least one encrypted personal attribute to the external entity.

In a ninth inventive aspect, the invention provides a trusted server for renewing the master key stored in a token of a user whose at least one personal attribute has been already on-boarded into an external entity according to any of the embodiments of the first or second inventive aspect. In particular, the trusted server is configured to:

- establish a secure channel with the external entity;
- receiving, by the external entity, a payload comprising:

  ◦ a former master key and a new master keys, and
  ◦ at least one encrypted personal attribute that was encrypted using derived keys from the former master key;

- derive out from the former master key the derived keys associated to the personal attributes; and decrypt them;
- derive out from the new master key as many new derived keys as personal attributes are; and encrypt them;

- encrypt each personal attribute with its respective new derived key; and
- send the at least one personal attribute encrypted with the new derived keys to the external entity.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Fig. 1      shows a system for on-boarding personal attribute(s) of a user to an external entity, according to some embodiments of the invention.

Fig. 2      shows method steps for on-boarding personal attribute(s) of a user to an external entity, according to some embodiments of the invention.

Fig. 3      shows a method for on-boarding personal attribute(s) of another user to a multi-user external entity, according to some embodiments of the invention.

Fig. 4      shows steps of a method for performing a transaction with a service provider by using the external entity according to some embodiments of the invention.

Fig. 5      shows steps of a method for method for renewing the master key stored in the token of the user according to some embodiments of the invention.

**DETAILED DESCRIPTION OF THE INVENTION**

As it will be appreciated by one skilled in the art, aspects of the present invention may be embodied as a method 20 for on-boarding personal attribute(s) of a first user (or multiple users 40) to an external entity, as a method 60 for performing transaction(s) with a service provider, as a method 80 for renewing master key(s), a system 10, an external entity 3, a token $2_A$, $2_B$, $2_C$, an issuing system 4, and a trusted server 6.

This invention encompasses both user preserved PID(s) (e.g., in multi-user digital wallet 3) and a new selective divulgation method based on symmetric cryptography.

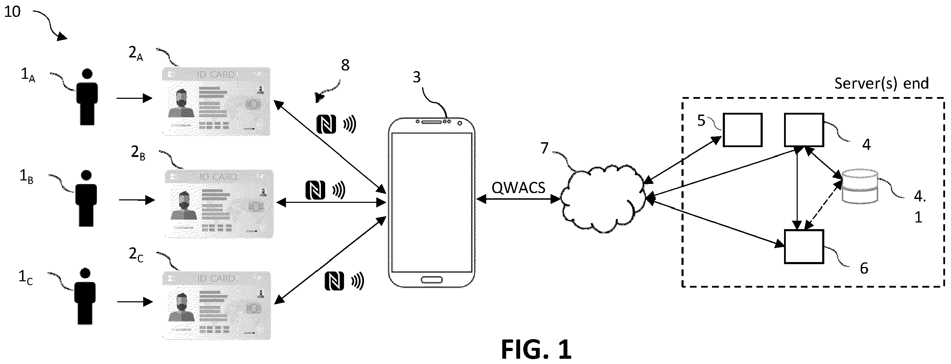

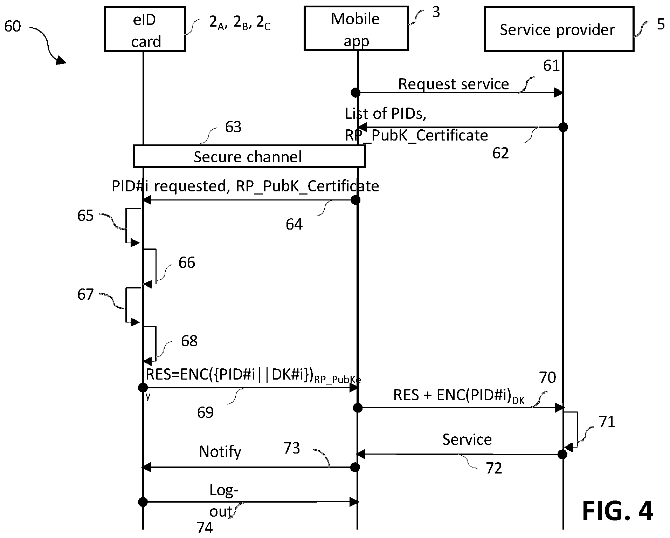

In **figure 1,** it is depicted a system 10 for on-boarding personal attribute(s) of a user $1_A$, $1_B$, $1_C$ to an external entity 3. Hereinafter, it is considered the exemplary embodiment where a user $1_A$, as a physical person, wishes to use his/her personal device as external entity 3, such as his/her smartphone that stores a digital wallet application (or simply "digital wallet"), to prove his/her identity and perform transactions with a service provider 5 (see figure 4).

As known, the first step is the on-boarding of user's personal attribute(s) into the digital wallet 3. Through these examples, the personal attributes will be exemplified as PIDs, to address the context of eIDAS. In eIDAS2 spec., each user has his/her own PID stored on the digital wallet application 3. Without these PIDs, the digital wallet 3 cannot be considered as eIDAS-enabled because once this data are on-boarded on the digital wallet 3, transactions can be conducted with the same legal effect as if done by proving the identity through own e.g., national ID card. In the following, it will be also considered that these PID are provisioned with a level of assurance, LoA, "high". Thus, the token $2_A$, $2_B$, $2_C$, and/or digital wallet 3 need to be certified according to common practice beforehand.

The present invention puts together a combination of identification mechanisms and cryptographic primitives, at application layer, so the authentication steps occurs prior to it. Advantageously, these two layers are not mixed up: the invention focusses on identification, i.e., how to deliver specific data with user's consent, data minimization, etc. in an authenticated environment, rather than on the authentication itself.

Referring back to figure 1, the personal device 3 may comprise a SE storing the digital wallet application, or the resulting user's on-boarded (and encrypted) personal attributes. The personal device 3 also includes (micro)processor(s) and/or (micro)controller(s) (not represented), as data processing means, one or several memories (not represented), as data storing means, and Input/Output (or I/O) interfaces (not represented). The processor executes notably, besides an Operating System (or OS), the digital wallet application as a (e.g., built-in) application or a web-browser type application.

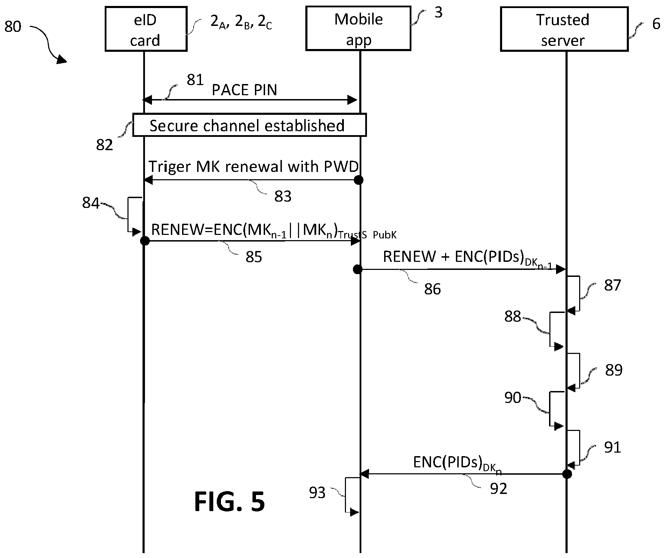

The device I/O interface may comprise a display screen, microphone, cameras, a fingerprint reader, speakers and (optionally) a keyboard, as an MMI, so as to interact with one or more users $1_A$, $1_B$, $1_C$. The display screen(s) may be used for prompting the user to link (e.g., tap) his/her personal token $2_A$, $2_B$, $2_C$, according to the invention, for displaying personal attributes requested by service providers for prior user's consent, or for prompting the user to renew cryptographic primitives such as the master key of the token (see figure 5).

The token $2_A$, $2_B$, $2_C$ are herein exemplified as eID cards. The user(s) $1_A$, $1_B$, $1_c$ can use the MMI to e.g., give consent on the personal attributes to disclose to third parties, input eID card passcode (e.g., PIN and/or PACE protocol), or directly launch requests to the service providers either through application or web-browser portals.

The personal device 3 is configured to establish a secure channel 7 with backend servers such as an issuing system 4, service provider(s) 5 (represented by a single one in figure 1), and the trusted server(s) 6 (represented by a single one). The communication network(s) 7 may include a secure communication protocol over a computer network or a mobile radiocommunication network(s). Additionally or alternately, the communication network(s) 7 may include a WLAN (acronym for "Wireless Local Area Network"), an Internet and/or Intranet type network(s). For instance, the communication network 6 may be Hypertext Transfer Protocol Secure (HTTPS) or, preferably, QWAC-based over TLS.

The personal device 3 is further configured to establish another secure channel 8 with any of the personal tokens $2_A$, $2_B$, $2_C$, of the users $1_A$, $1_B$, $1_C$, respectively. The communication chip card-reader can be contact- and/or contactless-based by using e.g., the APDUs of ISO-compliant commands. Preferably, as depicted in figure 1, there is a short-range contactless-based communication between the eID cards $2_A$, $2_B$, $2_C$ and personal device 3 based on Bluetooth, Bluetooth Low Energy, WiFi direct or, more preferably, NFC. Preferably, the communication is compliant with ISO/IEC 14443 or, more preferably, with ISO/IEC 18092.

The tokens $2_A$, $2_B$, $2_C$, exemplified as eID cards, may comprise electronic circuits or integrated-circuit chips. It may also store applications and crypto primitives stored in memory in particular EEPROM or flash in order to in particular carry out operations such as e.g., crypto operations. The eID cards according to the invention store, for instance, its private and public keys, master keys, certified public keys of third parties such as issuing system and/or trusted server(s), as well as a master key with indexes to the personal attributes labels. These application programs may be executed by a main processing unit $\mu$C2 or in one or more electronic circuits or electronic chips with associated integrated circuits. It may also integrate a short-range interface (e.g., NFC) in order to receive authentication or transaction information. In an alternative example not shown herein, as mentioned, the token may be a software-like token hosted on the personal device 3, such as application(s) stored and executed by the user device, that is/are different from the digital wallet.

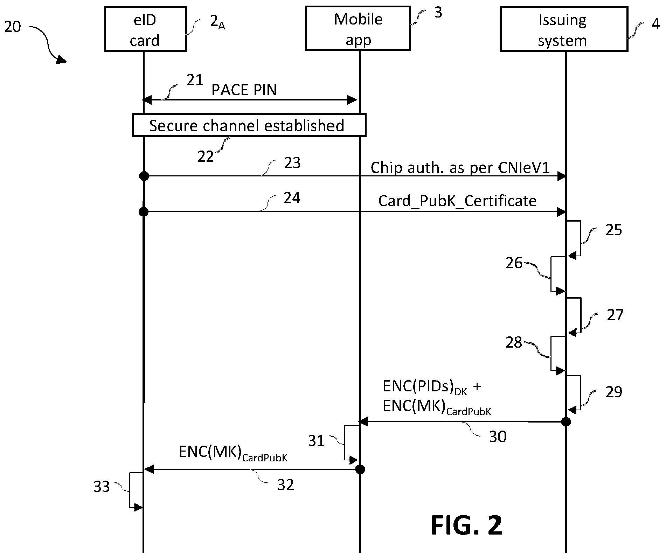

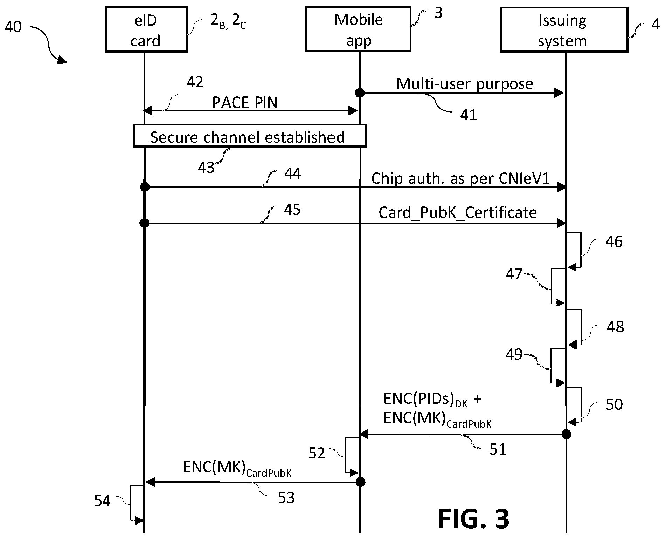

As already stated, the invention allows on-boarding of personal attribute(s) from a single user (see figure 2), likely the holder of the external entity, or from multiple users (see figure 3).

Thus, **figure 2** depicts method steps 20 for on-boarding personal attribute(s) of a user $1_A$ to an external entity 3. The present invention uses a smartcard to exploit the fact that eIDAS2 Regulation is aligned with Reg. (EU)2019/1157 involving interaction of the digital wallet 3 with notified secure external hardware tokens (e.g., eID Card $2_A$).

The eID card $2_A$ is used as second factor of authentication for user $1_A$ (or holder) binding during the on-boarding of his/her personal attributes. Throughout these examples, the personal attributes will be exemplified as PIDs.

First, in step 21, eID card $2_A$ establish a session with the personal device 3 and, namely, with the digital wallet application. As an example, the key exchange protocol for establishing session is simply PIN-based or, preferably, based on Password Authenticated Connection Establishment (PACE) Key-Agreement Protocol where the user $1_A$ may be prompted to input a pre-established password or PIN of the eID card $2_A$ through the personal device 3. Be the case as it may, if the authentication is successful, i.e., PIN inputted is valid, a secure channel is established (step 22). As mentioned, preferably, this secure channel is established via NFC, so both the eID card $2_A$ and the personal device 3 are NFC-enabled devices.

During, before or after establishing this NFC-based secure session between the digital wallet 3 and the eID card $2_A$, the digital wallet also establishes a secure session over TLS with e.g. QWACS certificates. Then, in step 23, eID card $2_A$ establishes a session with the issuing system 4 through another key agreement protocol, such as per the one followed by the French eID card: *"Carte nationale d'identite electronique"*, CNIe.

Once secure session is established, e.g., through QWACS certificate, in step 24, the eID card $2_A$ provides its public key "Card_PubK" through a certified public key "Card_PubK_Certificate" to the issuing system 4. In step 25, the issuing system 4 authenticates the eID card $2_A$ by checking the Card_PubK_certificate and extracting Card_PubK.

In step 26, the issuing system 4 looks up (or retrieves) the personal attributes, as PID, from a legit or authentic source. This source can be e.g., a database 4.1 (shown in figure 1) belonging (and accessible) to the issuing system or a trusted third party such as a trusted server 6.

In step 27, the issuing system 4 generates a unique Master Key, MK, and derive out of it as many derived keys (or daughter keys), $DK_i$, as personal attributes ($PID_i$) were retrieved.

In step 28, the issuing system 4 encrypts each $PID_i$ with the respective $DK_i$ giving rise to $ENC(PID_i)_{DKi}$. In step 29, the issuing system 4 encrypts the MK with Card_PubK giving rise to $ENC(MK)_{Card\_PubK}$ and, in step 30, delivers $ENC(PID_i)_{DKi}$ to the digital wallet 3, to be stored therein as shown in step 31. And the issuing system also delivers the $ENC(MK)_{Card\_PubK}$ to the eID card $2_A$, through the digital wallet 4 (step 32), to be stored therein (step 33).

The solution proposed herein considers the digital wallet 3 as a simple proxy and, thus, the digital wallet never accesses PID(s) in clear.

**Figure 3** depicts a method 40 for on-boarding personal attribute(s) of another user to a multi-user external entity 3, according to some embodiments of the invention. The process is exactly the same as shown in figure 2 but there is an additional, and very first, step (step 41) wherein the digital wallet 3 declares a multi-user intent to the issuing system 4 before the actual on-boarding process.

This declaration can be done either before the on-boarding of the first user $1_A$ or when the second user $1_B$, $1_C$ wishes to on-board their personal attributes as well on the very same digital wallet 3. Each user $1_A$, $1_B$, $1_C$ will use his/her own token, such as the own eID card $2_A$, $2_B$, $2_C$.

In short, the eID card $2_B$ establishes 42 a session with the personal device 3 and, namely, with the digital wallet application resulting in a secure channel (step 43). Then, the eID card $2_B$ establishes 44 a session with the issuing system 4.

Once secure session is established, the eID card $2_B$ provides 45 its public key "Card_PubK" through a certified public key "Card_PubK_Certificate" to the issuing system 4. In response, the issuing system 4 authenticates 46 the eID card $2_B$ by checking the Card_PubK_certificate and extracting Card_PubK. The issuing system 4 looks up 47 the personal attributes of the user $1_A$ or $2_B$. Finally, the issuing system 4 generates 48 a unique Master Key, $MK_B$, and derive out of it as many derived keys (or daughter keys), $DK_i$, as personal attributes ($PID_i$) were retrieved.

Finally, the issuing system 4 encrypts 49 each $PID_i$ with the respective $DK_i$ giving rise to $ENC(PID_i)_{DKi}$. Then, the issuing system 4 encrypts 50 the MK with Card_PubK giving rise to $ENC(MK)_{Card\_PubK}$ and, in step 51, delivers $ENC(PID_i)_{DKi}$ to the digital wallet 3, to be stored therein as shown in step 52. And the issuing system also delivers the $ENC(MK)_{Card\_PubK}$ to the eID card $2_A$, through the digital wallet 4 (step 53), to be stored therein (step 54).

As a result, the digital wallet 3 hosts as many enciphered set of PID(s) as users sharing the digital wallet 3 that maintains the associated metadata binding each PID set to a unique eID card $2_A$, $2_B$, $2_C$.

The invention thus anticipates and preempts a wallet multi-user functionality that can be deployed and specified by some standardization instances (e.g., ETSI, CEN), and integrated by OEMs in their mobile OS as a built-in functionality.

**Figure 4** shows steps of a method 60 for performing a transaction with a service provider 5 by using the external entity, namely the digital wallet 3 according to any of the figures 1 to 3. The service provider can be either a RP, TSP, an issuing system or a trusted server. As mentioned in figure 1, a secure channel 7 can be established between the digital wallet and the service provider.

First, in step 61, the digital wallet 3 requests a service provider 5 to perform a transaction. This request may be done through a dedicated application or through a web-browser portal.

Then, in step 62, in response, the service provider 5 sends a list of PIDs to be proven before performing the requested transaction. The service provider provides also its certified public key (RP_PubK_Certificate).

In a preferred embodiment, not shown, between steps 61 and 62, i.e., upon reception of the transaction request from the digital wallet 3, the service provider 5 generates a unique transaction data, such as a nonce, to avoid replay attacks (DataForNoReplay). This DataForNoReplay is thus included in the reply to the digital wallet, and, as explain hereinafter, forwarded to the eID card $2_A$, $2_B$, $2_C$.

Then, the digital wallet 3 prompts the user $1_A$, $1_B$, $1_C$ to pair his/her eID card $2_A$, $2_B$, $2_C$, and the user couples (e.g., taps) their eID card (e.g., NFC-based connection) establishing a PACE PIN session giving rise to a secure session (step 63). During (or before) this session, the mobile wallet may display to the user the requested list of PID(s) for their individual or group selection. Depending on this choice, downstream, digital wallet may only request the eID card to provide the derived keys for the consented PID(s), so that the eID card will only provide the derived keys associated to the selected PIDs by the user.

Then, in step 64, the digital wallet sends an instruction to the eID card the following data:

- the certified public key received from the service provider (e.g. as a card verifiable certificate), and
- the list of requested PID(s) denoted by e.g. their respective label(s) (PID#i) such as "Family_name", "First_name", "Address", "Birthdate", etc.

In step 65, the eID card verifies the certificated public key and, if verification is successful, extracts the RP_PubKey. Driven by the labels PID#i, in step 66, the eID card identifies the derived key associated with the PID as DK#i. After, in step 67, eID Card concatenates in tuples the requested PID#i labels with the associated DK#i.

Finally, in step 68, the eID card encrypts the concatenation with RP_PubKey giving rise to the following response:

$$RES = ENC(\{PID\#0||DK\#0\}...\{PID\#i||DK\#i\})_{RP\_PubKey}$$

Preferably, not shown, the eID card may also include the DataForNoReplay generated by the service provider 5 in its response RES. In an example, this data can be concatenated, or mixed, as follows:

$$RES = ENC(\{DataForNoReplay||PID\#0||DK\#0\}...\{PID\#i||DK\#i\})_{RP\_PubKey}$$

In step 69, the eID Card transmits the resulting payload RES to the digital wallet. Once received, in step 70, the digital wallet 3 appends the encrypted PIDs stored by the digital wallet alongside the RES to the service provider 5. In an embodiment, the digital wallet only appends the encrypted PIDs chosen originally by the user (i.e., for which he consented).

In step 71, the service provider thus decrypt RES with its private key (RP_PrivKey) and will use DK#i to decipher the corresponding PID#i attribute. Preferably, not shown, the service provider will verify whether the DataForNoReplay matches the original one and, if affirmative, proceed with the following steps. Otherwise, a replay attack is identified and transaction is aborted.

Then, the service provider shall verify if the received IPD(s) meets a pre-established condition to allow performing the requested transaction. If affirmative, in step 72, the service provider allows the digital wallet to perform the requested transaction. Optionally, the service might alternatively be for the token as shown in step 73, or simply notify.

Finally, in step 74, there is a session log-out between the eID card and digital wallet that may give rise, optionally, to a master key renewal (see figure 5). Alternative, the log-out may happen just after providing the RES to the digital wallet or, in parallel, as the service is furnished to the digital wallet.

**Figure 5** shows steps of a method 80 for renewing the master key stored in the token, as an eID card, of the user. Frequent master key renewals increases the PID(s) encryption entropy on the digital wallet, thus positively affecting the security.

Besides the public and private keys, the eID card also stores the public key of the trusted server TrustS_PubK. The provisioning can be done during manufacturing, on personalization, or later on.

As already mentioned, through steps 81 and 82, the eID card triggers a key exchange protocol with the mobile wallet resulting in the establishment of an e.g., NFC-based secure channel. Otherwise, the established session may still continue from figure 4.

In step 83, user enters a password, "PWD", (optionally within a PACE or PIN session) that triggers new master key generation on-board of the eID card. Then, in step 84, the eID card generates the new master key $MK_n$ and encrypts with TrustS_PubK the former master key $MK_{n-1}$ and the newly generated one as follows: RENEW = $ENC(MK_{n-1} \parallel MK_n)_{TrustS\_PubK}$.

In step 85, the eID card returns the RENEW payload to the digital wallet. In step 86, the digital wallet appends the encrypted PID, $ENC(PIDs)_{DKn-1}$, with the former master key to the RENEW payload to the trusted server.

In step 87, the trusted server decrypts with its private key, TrustS_PrivK, the RENEW payload. In step 88, the trusted server generates from $MK_{n-1}$ as many derived keys $DK_{n-1}$ as the number of encrypted PID(s) received. In step 89, the trusted server decrypts $ENC(PIDs)_{DKn-1}$ with their respective $DK_{n-1}$. Then, in step 90, the trusted server generates from the new master key $MK_n$ as many derived daughter keys $DK_n$ as number of PID(s). This number of PID(s) can be taken either consulting again the database 4.1, or by matching the number of encrypted PID(s) received before.

In step 91, the trusted server then encrypts each PID with the associated newly generated derived key. Again, to smoothen the communication between the eID card and the digital wallet, the association, enumeration and indexing between PID labels and actual derived keys may be given by the eID card itself or passed on by the trusted server to the eID card through the mobile app.

Be as it may, in step 92, the trusted server sends back to the digital wallet the $ENC(PIDs)_{DKn}$, which are to be stored therein (step 93).

At the end of the master key renewal process, the combination eID card - digital wallet may equally perform transactions as shown in figure 4. In addition, other users may on-board on the digital wallet and, similarly, these users may renew their crypto primitives as explained in figure 5.

**Claims**

1. A method (20) for on-boarding at least one personal attribute ($PID_i$) of a user to an external entity (3), the method comprising:

   - authenticating (24), by a token ($2_A$) of the user ($1_A$), to an issuing system (4);
   - if the token ($2_A$) is authenticated (25), computing by the issuing system (4) the following steps:

     ○ retrieving (26) the at least one personal attribute ($PID_i$) of the user ($1_A$);
     ○ generating (27) a master key (MK), and deriving out as many derived keys ($DK_i$) as personal attributes ($PID_i$) are retrieved;
     ○ encrypting (28) each personal attribute with a respective derived key;

   - sending (30), by the issuing system (4), the master key to the token ($2_A$), the token storing (33) the master key; and
   - sending (30, 32), by the issuing system (4), the at least one encrypted personal attribute to the external entity (3), the external entity storing (31) the set of at least one encrypted personal attribute of said user ($1_A$).

2. The method according to claim 1, wherein, during authentication, the token ($2_A$) sends (24) to the issuing system (4) a certified public key of the token ($2_A$); so that the issuing system encrypts (29) the master key with the certified public key of the token and sends the encrypted master key to the token for its storage.

3. The method according to claim any of claims 1 or 2, wherein the at least one personal attribute of the user is labelled (PID#i), these at least one corresponding label being stored into the token in an associable manner with the corresponding derived key to be derived from the master key.

4. A method (40) for on-boarding at least one personal attribute of a second user ($1_B$) to the external entity (3) where at least one personal attribute of a first user has been already on-boarded according to any of claims 1 to 3, the method comprising:

   - declaring (41), by the external entity (3), a multi-user configuration to the issuing system (4);
   - authenticating (45), by a token ($2_B$) of the second user ($1_B$), that is, a second token ($2_B$), to the issuing system (4);
   - if the second token is authenticated (46), computing by the issuing system the following steps:

     ○ retrieving (47) the at least one personal attribute of the second user ($1_B$);
     ○ generating (48) a second master key ($MK_B$), and deriving out as many derived keys as personal attributes of the second user are retrieved;

○ encrypting (49) each personal attribute of the second user with a respective derived key from the second master key;

- sending (51, 53), by the issuing system, the second master key to the second token, the second token storing (54) the second master key; and
- sending (51), by the issuing system, the at least one encrypted personal attribute of the second user to the external entity, the external entity storing (52) the set of at least one encrypted personal attribute of said second user.

5. A method (60) for performing a transaction with a service provider (5) by using the external entity (3) where at least one personal attribute ($PID_i$) of a user ($1_A$) has been already on-boarded according to any of claims 1 to 4, the method comprising:

- requesting (61), by the external entity (3), to perform the transaction to the service provider (5);
- in response, the external entity (3) receives (62) a requested list of at least one personal attribute to be proven to the service provider before performing the requested transaction;
- forwarding (64), by the external entity (3), the requested list of at least one personal attribute to the token ($2_A$) of the user ($1_A$);
- identifying and generating (66), by said token, the derived key associated with each of the requested personal attributes from the list;
- sending (69), by said token ($2_A$), to the external entity (3), the at least one derived key associated with the requested personal attributes from the list;
- appending, by the external entity, at least one encrypted personal attribute that was stored in the external entity to the at least one derived key received from the token; and sending (70), by the external entity, this resulting payload to the service provider;
- decrypting (71), by the service provider, the at least one personal attribute received with its associated derived key;
- verifying, by the service provider, if the received at least one personal attribute meets a pre-established condition to allow performing the requested transaction; and
- if affirmative, the service provider allows (72) the external entity to perform the requested transaction.

6. The method according to claim 5, wherein in response to the request to the service provider by the external entity to perform the transaction, the external entity further receives (62) a certified public key of the service provider, which is in turn forwarded (64) to the token, so that the token encrypts (68) the at least one derived key associated with the requested personal attributes from the list before being sent to the external entity.

7. The method according to any of claims 5 or 6, when dependant from claim 3, wherein the external entity forwards (64) to the token the corresponding labels (PID#i) of the personal attributes requested by the service provider; so that said token ($2_A$) identifies and generates the corresponding derived key associated with the requested labels; and wherein the token indexes the generated derived keys with their respective labels in the response to the external entity.

8. The method according to any of claims 5 to 7, wherein the list of at least one personal attribute requested by the service provider is displayed on a graphical user interface of the external entity, wherein the method further comprises receiving, by the external entity, a validation input with at least one validated personal attribute from the requested list.

9. A method (80) for renewing the master key ($MK_{n-1}$) stored in the token ($2_A$) of the user ($1_A$) whose at least one personal attribute has been on-boarded into the external entity (3) according to any of claims 1 to 4, the method comprising:

- triggering (83), by the external entity (3), a master key renewal in the token;
- generating (84), by the token ($2_A$), a new master key ($MK_n$);
- sending (85), by the token ($2_A$), both the former ($MK_{n-1}$) and new ($MK_n$) master keys to the external entity (3);
- appending, by the external entity, the at least one encrypted personal attribute that was stored in the external entity to the master keys ($MK_{n-1}$, $MK_n$) received from the token; and sending (86), by the external entity, this resulting payload to a trusted server (6);
- deriving out (88), by the trusted server (6), from the former master key ($MK_{n-1}$) the derived keys ($DK_{n-1}$) associated to the personal attributes; and decrypting (89) them;

- deriving out (90), by the trusted server (6), from the new master key ($MK_n$) as many new derived keys ($DK_n$) as personal attributes are; and encrypting (91) them;
- encrypting, by the trusted server, each personal attribute with its respective new derived key; and
- sending (92), by the trusted server, the at least one personal attribute encrypted with the new derived keys to the external entity, the external entity storing (93) the set of at least one encrypted personal attribute of said user.

10. The method according to claim 9, wherein the token already stores ($2_A$) the public key of the trusted server (6), so that the former and new master keys ($MK_{n-1}$, $MK_n$) are encrypted with this public key of the trusted server before being sent to the external entity.

11. The method according to any of claims 9 or 10, wherein the master key renewal (80) is triggered at least by one of the following situations:

   - per use, such as during session logging-out (74) during, or after, a satisfactory transaction with the service provider (5);
   - periodically such as daily or weekly; and/or
   - at the request of the user.

12. The method according to any of the claims 1 to 11, wherein the external entity (3) is a user device, the user device comprising a digital wallet, preferably a multi-user digital wallet.

13. A system (10) for on-boarding at least one personal attribute of a user to an external entity, the method comprising:

   - the external entity being configured to establish a secure channel with a token, preferably a short-range communication channel; and to establish another secure channel with an issuing system, preferably over a Transport Layer Security protocol;
   - the token being configured to:

       ∘ establish a secure channel with the external entity, and
       ∘ be authenticated to the issuing system;

   - the issuing system configured to:

       ∘ authenticate the token of the user,
       ∘ retrieve the at least one personal attribute of said user;
       ∘ generate a master key, and to derive out as many derived keys as personal attributes are retrieved;
       ∘ encrypt each personal attribute with the respective derived key;
       ∘ send the master key to the token through the external entity; and
       ∘ send the at least one encrypted personal attribute to the external entity,

   wherein the token is further configured to store the master key; and the external entity is further configured to store the set of at least one encrypted personal attribute of said user.

14. An external entity (3), such as a user device comprising a digital wallet, with on-boarded personal attributes of a user, wherein the external entity is configured to establish a secure channel with a token of said user, preferably a short-range communication channel; and to establish another secure channel with an issuing system, preferably over a Transport Layer Security protocol;
and wherein the external entity is further configured to store the set of at least one encrypted personal attribute of said user.

15. A token ($2_A$, $2_B$, $2_C$) configured to:

   - establish a secure channel with an external entity;
   - be authenticated to an issuing system; and
   - store a master key generated by the issuing system, and labels of at least one personal attribute of the user on-boarded into the external entity, these at least one corresponding label being stored into the token in an associable manner with the corresponding derived key to be derived from the master key.

16. An issuing system (4) for issuing at least one personal attribute of a user to be on-boarded to an external entity, the issuing system being configured to:

   - establish a secure channel with the external entity;
   - authenticate a token of the user,
   - retrieve at least one personal attribute of said user;
   - generate a master key, and to derive out as many derived keys as personal attributes are retrieved;
   - encrypt each personal attribute with the respective derived key;
   - send the master key to the token through the external entity; and
   - send the at least one encrypted personal attribute to the external entity.

17. A trusted server (6) for renewing the master key stored in a token of a user whose at least one personal attribute has been already on-boarded into an external entity according to any of claims 1 to 4, the trusted server being configured to:

   - establish a secure channel with the external entity;
   - receiving, by the external entity, a payload comprising:

      ◦ a former master key and a new master keys, and
      ◦ at least one encrypted personal attribute that was encrypted using derived keys from the former master key;

   - derive out from the former master key the derived keys associated to the personal attributes; and decrypt them;
   - derive out from the new master key as many new derived keys as personal attributes are; and encrypt them;
   - encrypt each personal attribute with its respective new derived key; and
   - send the at least one personal attribute encrypted with the new derived keys to the external entity.

**FIG. 1**

20

| eID card | 2$_A$ | | Mobile app | 3 | | Issuing system | 4 |

21 PACE PIN

Secure channel established

22

23 Chip auth. as per CNIeV1

24 Card_PubK_Certificate

25

26

27

28

29

ENC(PIDs)$_{DK}$ + ENC(MK)$_{CardPubK}$

30

31

ENC(MK)$_{CardPubK}$

32

33

**FIG. 2**

FIG. 3

40

eID card   $2_B, 2_C$

Mobile app   3

Issuing system   4

42

PACE PIN

Multi-user purpose

41

Secure channel established

43

44   Chip auth. as per CNIeV1

45   Card_PubK_Certificate

46

47

48

49

50

$ENC(PIDs)_{DK} + ENC(MK)_{CardPubK}$

51

52

$ENC(MK)_{CardPubK}$

53

54

FIG. 4

EP 4 407 490 A1

FIG. 5

Europäisches
Patentamt

European
Patent Office

Office européen
des brevets

# EUROPEAN SEARCH REPORT

Application Number

EP 23 30 5115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2006 113872 A (TOSHIBA TEC KK) 27 April 2006 (2006-04-27) * abstract * * paragraph [0006]; claim 1 * ----- | 1-13,16, 17 | INV. G06F21/34 G06F21/43 |
| A | US 2016/006566 A1 (MORGNER FRANK [DE]) 7 January 2016 (2016-01-07) * abstract; figure 5 * * paragraph [0014] – paragraph [0024] * * paragraph [0152] – paragraph [0157] * ----- | 1-13,16, 17 | |

TECHNICAL FIELDS
SEARCHED      (IPC)

G06F
H04L
H04W

The present search report has been drawn up for all claims

| Place of search | Date of completion of the search | Examiner |
|---|---|---|
| The Hague | 24 July 2023 | Adkhis, Franck |

EPO FORM 1503 03.82 (P04C01)

EP 4 407 490 A1

Europäisches
Patentamt
European
Patent Office
Office européen
des brevets

Application Number

EP 23 30 5115

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

[X] None of the further search fees have been paid within the fixed time limit. The present European search report has been drawn up for those parts of the European patent application which relate to the invention first mentioned in the claims, namely claims:

1-13, 16, 17

☐ The present supplementary European search report has been drawn up for those parts of the European patent application which relate to the invention first mentioned in the claims (Rule 164 (1) EPC).

22

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

    1. claims: 1-13, 16, 17

        Method, system, issuing system and trusted server to
        on-board at least one personal attribute of a user to an
        external entity.
                    ---

    2. claim: 14

        External entity to establish secure channels for
        communication between the external entity, a token of the
        user, and an issuing system
                    ---

    3. claim: 15

        Token to securely establish a channel between a token and an
        external entity and provide efficient management of personal
        attribute data in a token
                    ---

## ANNEX TO THE EUROPEAN SEARCH REPORT
## ON EUROPEAN PATENT APPLICATION NO.

EP 23 30 5115

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2023

| Patent document cited in search report | | Publication date | Patent family member(s) | | Publication date |
|---|---|---|---|---|---|
| JP 2006113872 | A | 27-04-2006 | NONE | | |
| US 2016006566 | A1 | 07-01-2016 | DE 102013203257 | A1 | 28-08-2014 |
| | | | EP 2962439 | A1 | 06-01-2016 |
| | | | US 2016006566 | A1 | 07-01-2016 |
| | | | WO 2014131675 | A1 | 04-09-2014 |

EPO FORM P0459

For more details about this annex : see Official Journal of the European Patent Office, No. 12/82